# EUROPEAN PATENT SPECIFICATION

(11) **EP 1 737 928 B1**
(45) Date of publication and mention of the grant of the patent: **14.05.2025**
(21) Application number: 05747543.6
(22) Date of filing: 15.04.2005
(51) Int. Cl.: C10G 33/00, B01D 17/04, B01D 19/00

(54) **PROCESS FOR THE TREATMENT OF CRUDE OIL VIA THE SEPARATION OF A WATER-IN-OIL HYDROCARBON EMULSION AND APPARATUS FOR IMPLEMENTING THE SAME**
VERFAHREN ZUR REINIGUNG DES ERDÖLS DURCH TRENNUNG EINER KOHLENWASSERSTOFFEMULSION WASSER-IM-ÖL UND EINRICHTUNGEN UM SOLCHE VERFAHREN ZU FÜHREN
PROCEDE DE TRAITEMENT DE PETROLE BRUT, AU MOYEN DE SEPARATION D'UNE EMULSION D'EAU DANS L'HUILE D'HYDROCARBURE ET APPAREILS PERMETTANT DE METTRE EN OEUVRE CEUX-CI

(30) Priority: 15.04.2004 EP 04291012
(43) Date of publication of application: 03.01.2007
(73) Proprietor: TotalEnergies OneTech, 92400 Courbevoie (FR)
(72) Inventor: VU, Van-Khoi, 75019 Paris (FR)
(74) Representative: Hirsch & Associés
(86) International application number: PCT/EP2005/004654
(87) International publication number: WO 2005/100512

(56) References cited:
- WO-A1-92/19351
- CA-A- 915 589
- DE-B- 1 223 805

## Description

### FIELD OF THE INVENTION

The invention relates to a process for the treatment (purification) of crude oil (produced from a well, i.e. production crude oil) and an apparatus for implementing it.

### STATE OF THE ART

Crudes or crude oils (produced from wells or issued from reservoirs, or known as production crudes) must be processed in order to comply with three main characteristics:
- RVP vapour pressure (Reid Vapour Pressure), typically less than 11 psi, to ensure that the crude is stable and to avoid any degassing during transport or storage,
- volume % of water and sediment or BSW (Basic Sediment and Water), generally 0.5% v/vat the most,
- Salinity, generally less than 100 mg/l (equivalent NaCl), in particular less than 60 mg/l.

Processing is therefore carried out in a conventional way. The problem is however a special one in the case of offshore fields, more specifically in deep water, where the processing units are on floating supports. These are generally FPSOs (Floating Production Storage and Off-loading) *- vessels equipped with facilities for the processing, production and offloading of petroleum fluids -* or a combination between an FPU (Floating Production Unit) *- barges equipped with petroleum fluid processing and production facilities* - and an FSO (Floating Storage and Off-loading) *- vessels or barges equipped with storage tanks and facilities for unloading petroleum fluids.* In all cases this processing is carried out in what is called the "topsides", that is the upper part of the floating support.

Processing of this type is only the application of systems which exist onshore to offshore on floating units. Because of this these systems suffer from several problems, in particular size, topsides weight, purchasing cost and operating cost.

The aim of the invention is to overcome one or more of these problems.

WO-A-9219351 describes a process for the separation of a drilling fluid of the "underbalanced drilling" type, that is a fluid typically containing (by weight): solids from the country rock (drill cuttings): 5 to 15%; solids for the control of density and emulsifiers (bentonite, barytes, polymers, etc.): 5 to 35%; liquid phase of the mud (water or initial synthetic hydrocarbons): 50 to 85%; liquid phase of the hydrocarbons from the field: 5 to 10%. This type of drilling fluid is not in any way comparable with a production crude, namely one mainly containing hydrocarbons from the field and water, with relatively few solids (typically less than 10%, generally less than 5%). This document describes means for the separation of this drilling fluid, comprising venting and recovering of some of the solids, and dispatch of the emulsified phase (still containing solids) to a separating unit in which each phase, namely oil, water and interface, are recovered and processed. An emulsion interface flow is specifically drawn off for delivery to a cyclone separator.

DE-A-1223805 describes a process and apparatus for distributing hot water above the oil phase during water/oil decantation.

CA-A-915589 describes a conventional three phase (oil/water/gas) separation process.

### SUMMARY OF THE INVENTION

The invention therefore provides a process for the treatment or processing (purification) of production crude according to claim 1. The oil will notably fulfill the commercial requirements, said treatment process being able to perform the three functions of stabilization (obtaining the required RVP), dewatering (or dehydrating) (obtaining the required BSW) and desalting (obtaining the required salt content).

The invention also provides an apparatus according to claim 12 for implementing the process for the treatment of production crude according to claim 1.

The invention also provides a ship or barge according to claim 18.

### BRIEF DESCRIPTION OF THE DRAWINGS

- Figure 1 is a flow chart of a process according to the prior art,
- Figure 2 is a flow chart of a process according to one embodiment of the invention,
- Figure 3 is a view in cross-section of apparatus according to a second embodiment according to the invention,
- Figure 4 is a graph showing the change in the viscosity of the emulsion of a petroleum fluid as a function of water content,
- Figure 5 is a view in cross-section of apparatus according to one embodiment of the invention,
- Figure 6 is a view in cross-section of part of apparatus according to the invention.

### DETAILED DESCRIPTION OF EMBODIMENTS OF THE INVENTION

The invention will now be described more particularly with reference to the appended drawings.

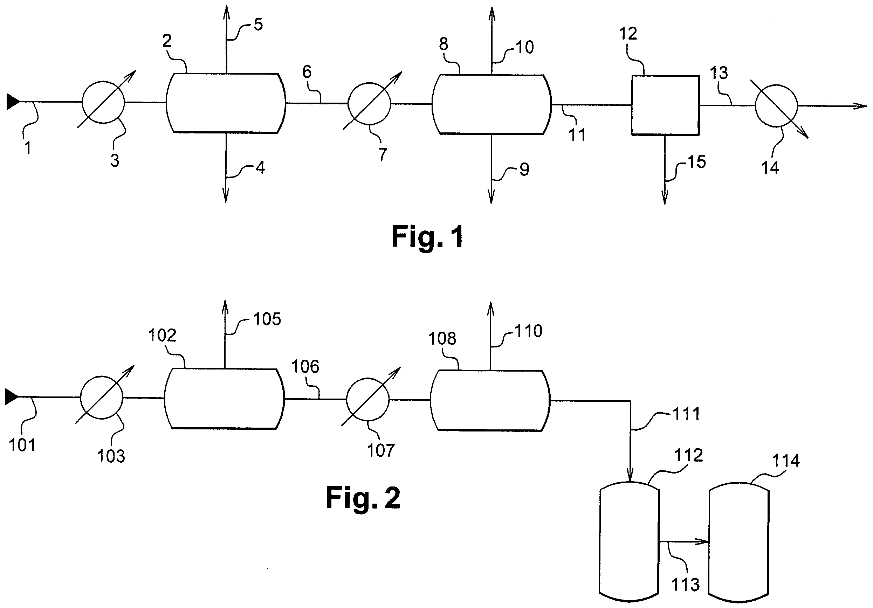

With reference to Figure 1, a conventional scheme for a multi-stage separation process (in general 2 to 3 stages, 2 stages being illustrated in Figure 1) will be described, the components being on the topsides of the ship. The crude (or heavy oil) containing an oil phase in total or partial emulsion with an aqueous phase and a gas phase arrives at first separator (2), also known as a "slug catcher", via a pipe (1). This first separator performs the function of two-phase (liquid/gas) or three-phase (oil/water/gas) separation and also performs the function of preventing slugs or excess pressures from passing to subsequent levels in the process. Insofar as the remainder of the process relates to the separation of an emulsion, any instability, surge or excess pressure in the process will have an adverse effect because it will disturb the gravity separation of water droplets in the oil phase and gravity ascension of oil droplets in the water phase and, as a consequence, gas/liquid and oil/water separations throughout the rest of the processing. This is why the residence time in the first separator is generally quite long - several minutes, often more than five minutes. In the case of large flows the first separator or slug catcher has a large volume, up to many times the volume of the riser or the well casing. Volumes may amount to several hundred m³. Whereas such volumes should not give rise to any problems on shore, they may give rise to problems offshore.

In order to assist separation in general the fluids are heated in an exchanger (3) before the first or second separator. Typically the operating conditions in the first separator are: temperature 60-90°C and pressure 10-20 bars; exceptionally the pressure may even exceed 50 bars.

In a conventional processing scheme, in order to comply with the RVP, BSW and salt specifications the following operations must be performed before crudes are transferred to the storage tanks:
- control of slugs of gas and liquid (slug-catcher),
- water/oil separation,
- stabilization of the crudes, and
- dewatering and desalting.

Typically heating of the fluids to a temperature from 45°C to 65°C is required partly to improve oil/water separation, i.e. the coalescence of droplets and their settling out in the liquid phases, and partly to encourage degassing of the crudes in order to stabilise them. In order to achieve these functions of dewatering and desalting, the operating temperature is most often between 80°C and 100°C.

The separators operates most often as three-phase separators. The separated water is passed to the water treatment unit (not shown) via a pipe (4). The gas leaves the separator via a pipe (5) to a gas processing unit (not shown). The separated oil phase leaves the separator through a pipe (6) towards a further separating unit.

The oil phase in pipe (6) is heated in an exchanger (7) before entering a second separator (8). The two heating stages are designed to ensure stabilisation of the crude. The second separator is a three-phase separator and produces a flow of water, a flow of gas and a flow of oil phase. The operating conditions in the second separator are in general: temperature from 60°C to 90°C and pressure of the order of about 0.5 to 1 bar above the atmospheric pressure.

In a 3-stage separation system the second separator operates under pressure conditions which are intermediate between the pressure of the first separator and the pressure of the "atmospheric" separator. The oil phase is then passed to the third separator which operates at a pressure of the order of about 0.5 to 1 bar above the atmospheric pressure. The 3-stage variant will not be considered below; it is however to be understood that the problem of slugs or pressure and/or flow rates variations arises regardless of the number of stages.

Flows of water and gas are produced from pipes (9) and (10) respectively. The water is passed to the water treatment unit while the gas is passed to a gas treatment unit. A flow of oil phase is withdrawn from the separator through a pipe (11). Given that the last separator operates at a pressure close to atmospheric pressure, the liquids are also degassed. The oil phase flow still contains water (sometimes up to 10%). This flow is then passed to a desalting/dewatering unit. These two functions can be combined in a single device. In some cases where desalting is not necessary, dewatering alone may be carried out. This unit is indicated on the diagram (12) and is an electrostatic coalescer. A potential difference is applied between two plates to improve the oil/water separation. For the desalting function wash water is injected into the "fluids" stream at the inlet to the desalting unit, just upstream from a mixing valve. The wash water may be demineralised water, deaerated seawater, or previously treated production water.

The crude treated in this way is removed via a pipe (13) and then is cooled (e.g. up to about 45°C) in an exchanger (14) before being passed either to storage tanks to await removal or directly to treated crude transport facilities such as oil tankers or pipelines. Water is drawn off from the dewatering or dehydrating unit (12) via a pipe (15) and passed to the water treatment unit or returned to one of the two separators mentioned above. In fact in some cases where the oil is difficult to separate from the aqueous phase, recycling of the water (aqueous phase) extracted from the equipment downstream helps oil/water separation by operating under conditions of so-called emulsion inversion, i.e. change from a water-in-oil emulsion to an oil-in-water emulsion, which is easier to separate.

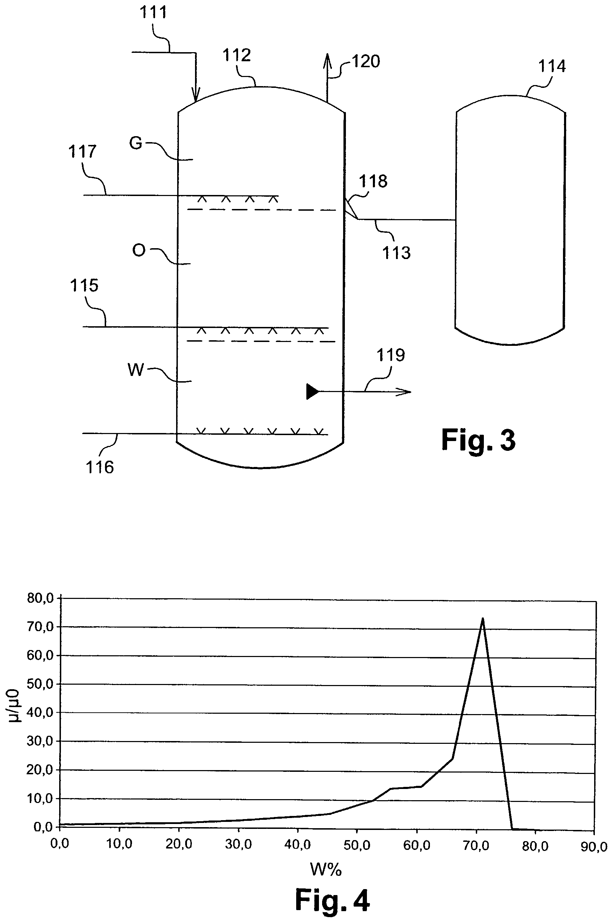

This is illustrated in Figure 4, which provides an example of viscosity in relation to the water content of the emulsion. This may be a water-in-oil emulsion if the water content lies below a specific limit in the extracted fluid (e.g. 65%) or oil-in-water if the water content is over that limit. This limit corresponds to an inversion point for the emulsion and lies within a range from 0 to 80% water. The emulsion is easier to separate when it is an oil-in-water emulsion.

In addition to this the water which is returned to the separator is then discharged to the water treatment unit with the production water extracted in the separator. In particular the water return to the separator from the desalting unit becomes saturated with dissolved gases in the separator and therefore becomes easier to treat in the water treatment unit.

Water treated in the water treatment unit is either discharged to the sea or reinjected underground.

An embodiment of a process according to the invention will be described with reference to Figure 2. In this process the crude arrives via a pipe (100) at a first separator (102). In comparison with the first separator in the prior art this first separator may not perform the three-phase separation function nor the "slug catcher" function. It may only carry out the gas/liquid separation function. In fact in the process according to the invention it is possible to withstand excess liquid flowrates and pressures without interfering with downstream processing. In comparison with the first separator (2) in Figure 1, the separator (102) is very much smaller, the volume generally being between 35% and 55% of that of separator (2) for the same throughput of crude being treated.

In the embodiment according to the invention only the degassing function is essential, for safety reasons. Heating to a maximum temperature of 65°C (and generally from 40 to 45°C) is generally sufficient to achieve the oil/water separation and oil stabilization in the vessels. This makes it possible to reduce retention times in the processing vessels, and also the vessel size. This temperature of 65°C is an upper limit compatible with the protective paints on the treatment and storage vessels.

The separator (102) may be preceded by a heat exchanger (103), but this will receive less energy than its counterpart in the prior art. The separator (102) produces two flows, a gas flow via a pipe (105), and the other a liquid flow, namely an emulsion, via a pipe (106). The emulsion is passed to a separator at a pressure close to atmospheric pressure (108), possibly through an exchanger (107). Again the heat required is in general not as much as in the prior art. In some instances, the exchanger may be a cooler, to avoid any unnecessary recompressing.

The heat exchange surface areas according to the invention are very low and correspond generally to 10% and 30% of those required for the conventional process. The separator at atmospheric pressure is present mainly for the sake of safety, because the circulating fluids should be at atmospheric pressure. Nevertheless this second separator is not necessary for implementation of the invention if the first separator is at a pressure close to atmospheric pressure, because the second separator only performs a low pressure degassing function. As in the prior art the flow of gas is produced via a pipe (110) and this is treated in the same way. A degassed emulsified liquid fraction is obtained via a pipe (111). This emulsified liquid fraction contains oil and water in the form of an emulsion. Reference will again be made to Figure 4 mentioned above.

In general it is not necessary to dewater this liquid fraction; this dewatering may however be carried out if necessary. The emulsified liquid fraction is then passed to the second part of the system according to the invention. This liquid fraction may be dewatered or on the contrary water may be added (particularly when transferring into the vessel). An emulsion whose water content has been adjusted to values of the order of 15 to 25% may for example be used.

Typically the operating conditions for the first separator are: temperature from 35°C to 65°C and pressure from 10 to 40 bars. Typically the operating conditions for the second "atmospheric" separator are: temperature from 45°C to 65°C and pressure from 1.2 bars to 2 bars absolute. This emulsified liquid fraction is then passed to the second part of the process.

The second part of the process is no longer located on the topsides, but in the hull of the floating support. A saving is thus obtained in the topsides, which in the prior art could amount to two or three deck levels. Savings can be of few hundreds of tons of equipment, i.e. thousands of tons taking into accounts ancillaries such as tubes, structures, etc. This second part includes at least one settling vessel in which the residence time for the fluids can typically vary between 4 and 24 hours.

The emulsified liquid fraction arrives via pipe (111) at washing and stripping vessel (112), which produces a flow of oil containing only little water (typically less than 0.5% BSW), this flow feeding a final settler (114) via a pipe (113) or an overflow. Water (typically demineralized water to obtain the desalting function) water and/or an acid (typically acetic acid) or desemulfying agents or any chemical agent may be added to the oil in pipe (113) if desired. The last settling vessel can be a storage vessel which does not need to be close to the washing (and stripping) vessel. In such a case, transfer of oil phase with little water towards storage vessel will take place owing to pumps installed in the washing vessel.

The degassed emulsified liquid fraction is a fraction which generally includes less than 5 Nm³ of dissolved gas/Nm³ of crude, in particular between 0.5 and 2 Nm³ of dissolved gas/Nm³ of crude. (Nm³ indicating normal Nm³).

An embodiment of the second part of the process according to the invention will be described with reference to Figure 3. The degassed liquid fraction arrives via the bottom of the vessel. The degassified emulsion enters the bottom of the vessel (112) and the oil then rises towards the interface and then towards the top where the oil phase is for example recovered via pipe (113). This embodiment is particularly suitable for acid or naphthenic crudes.

There are three phases, gas (G), oil (O) and water (W) in vessel (112). Just above the oil/water interface there is a water distribution system (115), for example a spray. The flow in the water distribution system is from 0% (at the start of production the crude does not contain water) to 90% by volume of the flow of fluids originating from the topsides, preferably 0% to 15% by volume. The spray is generally of the type producing drops of relatively large size, to encourage coalescence, especially at the emulsion zone in the water/oil interface. Washing said interface aims especially at diluting emulsifying agents (e.g. naphthenates) in the emulsion phase and thus at avoiding forming stable emulsions at the interface level.

Without wishing to be bound by theory, the applicant believes that the water distribution system has a number of effects. It contains or confines the emulsion towards the bottom. It acts on the consistency of what surrounds the droplet (especially by diluting emulsifying agents around the droplet), renders the emulsion less stable and encourages coalescence. It may alter the physical and chemical equilibria of the oil/water interface if chemicals such as acids or demulsifiers are injected in the wash water. The water distribution system also renders the interface "dynamic", in the sense that spraying prevents stagnation and creates continuous dilution in the interface region.

The stripping function is performed by injecting gas at the bottom of the vessel using a distributor (116). Typically gas injection is between 0 and 5 m³ of gas per m³ of liquid requiring treatment. Initially the gas increases the tendency to coalescence, because the bubbles of gas encourage agglomeration of the finer droplets. Secondly, when the gas is acid (in particular because of the presence of CO₂) this acidity will affect the naphthenates, preventing the formation of naphthenic salts. The acidity of the gas may impede the reaction which would otherwise take place in the presence of cations (such as Ca²⁺). In addition to this the spray brings about dilution of the salt species formed, with would otherwise lead to deposits, these being again mechanically prevented by the fact of the lack of stagnation. Naphthenates are found in the separated water. Often, stripping is even not necessary because spraying at the interface oil/water are sufficient to achieve the required treatments.

Provision may also be made for additional washing through a water distribution system (117) similar to water distribution system (115) but this time at the gas/water interface.

In comparison with water distribution system (115) this water distribution system may only cover part of the cross-section of the vessel. It makes it possible to reduce or even eliminate foaming.

The water distribution and stripping systems thus make it possible to achieve one or more of the effects below:
- improvement of coalescence between water-in-oil or oil-in-water droplets (the type of emulsion depending upon the proximity to one phase or the other),
- achieve "local" phase inversion upon displacement of the emulsion phase from its introduction at the bottom of the vessel up to the interface, whereby an improved separation efficiency is obtained, in comparison with a conventional separator,
- breaking of the emulsions,
- elimination or reduction in the formation of organic and/or mineral deposits, in particular naphthenate soaps, asphaltenes or other organic or mineral deposits at the oil/water interfaces or in the oil and/or water phases.

The quality and composition of the wash water may vary and is defined in relation to the physical and chemical characteristics of the crudes being treated. The wash water (in the emulsion spray or at the entry of the vessel (112)) may be fresh water, untreated or treated (deoxygenated and/or filtered) seawater, or untreated or treated (filtration of solids and removal of suspended hydrocarbon residues, etc.) production water from the separators. The wash water may also contain various chemical additives such as acetic acid, demulsifiers, products to prevent organic or mineral deposits, etc. The quality and composition of the stripping gas may vary and are defined in relation to the physical and chemical characteristics of the crudes being treated. The stripping gas may be a gas obtained from topsides production, or flue gases (containing in particular CO₂) coming from the inerting gas units of the treated crude storage tanks, etc.

Operating conditions in vessel (112) are in general: the residence time in the vessel is from 4 to 24 hours, typically from 6 to 12 hours, the pressure lies for example between atmospheric pressure and a few hundred millibars (resulting from the injection of gas), temperature for example lies between ambient temperature and 65°C, generally between 40°C and 50°C.

The size of the vessel depends upon the residence time and the flow; typically the size corresponds to that of a conventional storage vessel of a FPSO.

The fact that water is handled at this level, in the vessels, makes it easier and cheaper. In fact the quality of the water at the desalting units in the prior art is poor, whereas the water requiring treatment according to the invention is of better quality (due to the dilution effect and higher retention time).

The oil phase is for example recovered at an overflow (118) and then passed to the settler (114) via a pipe (113). The water generated is pumped from the bottom of the vessel and is passed to the water treatment unit via a pipe (119). The gas is removed via the header pipe (120) and is passed to the compressors.

The invention offers many advantages in comparison with the prior art. Firstly the fact that a major part of the process is located in the vessels makes it possible to economize on equipment on the topsides and it is also further possible to obtain a gain in ballast in the case of barges. In the state of the art, in order to keep the crude acid in order to prevent the deposition of naphthenates, it was often necessary to operate under pressure so that an acid gas was present at the same time as the crude. A high pressure always results in additional equipment, consumption and maintenance costs.

The process according to the prior art requires a greater input of heat (while at the end of the process it is necessary to cool the crude in order that it may be stored). In fact in the prior art the effects of residence time and heating are adjusted to break the emulsions, which means that considerable heating is required followed by cooling, operations which in practice double the size of the exchangers.

In the process according to the prior art the water required for separation in the case of fluids which are difficult to treat is a process water, whereas in the invention ordinary water may be used. Furthermore, when separating the emulsion in the prior art, if it was desired not to add too much water it was then necessary to adjust:
- the temperature (heat assisting the breaking of emulsions but as a downside promoting formation of organic deposits by influencing reaction kinetics), but this involves additional costs,
- the BSW, but the qualities of the final crude are then degraded, or drastic operating conditions are subsequently imposed on the dehydrating units,
- the retention time, but then large volumes are obtained,
- the added water must include chemical additives, which gives rise to a problem of cost and reprocessing.

The invention makes it possible to avoid one or more of these disadvantages.

Given that the process according to the invention can dispense with one or more dewatering or dehydrating units, there is net saving in equipment and operating costs.

The invention finds application for complex crudes or crudes which are difficult to treat. Crudes obtained by drilling in deep water are difficult to treat because the gas which makes extraction possible is under high pressure and this gives rise to instabilities in the course of the operations. By way of example it is current practice to "manually" adjust the upstream valves on the topsides to handle the slugs which form. A complex crude is a crude having one or more of the following features:
- it is very viscous (e.g. several hundred cPs under normal conditions),
- it is degraded (high acidity),
- it has a production water composition which is contaminated with reinjected water, this reinjected water being the water used in the topsides,
- it contains chemical compounds which encourage deposits such as ARN (product generating soaps, as named by company Statoil), naphthenates and carbonates (which can interact with the production water and promote formation of stable emulsions) or asphaltenes,
- it encourages foaming and/or emulsion when rising in the riser pipe,
- it contains paraffins, for example C₂₀₊.

A typical complex crude according to the invention is a naphthenic crude.

The invention makes it possible to go from a residence time of 20-30 minutes in the topsides in the prior art to a residence time of less than 10 minutes, for example between 3 and 8 minutes, in particular of the order of 5 minutes or even 3 minutes, in the case of the invention.

Although the invention is particularly intended for use on a floating support, it may be used on shore.

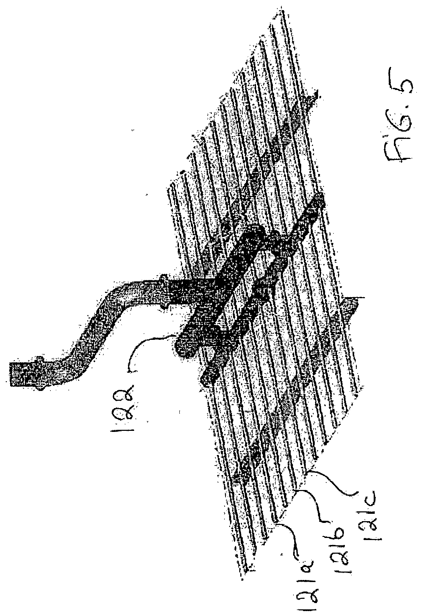

A spray or washwater distribution system (115) comprising a plurality of pipes (121a, 121b, 121c) connected together in a manifold arrangement, which are fed by a pipe (122), is described with reference to Figure 5.

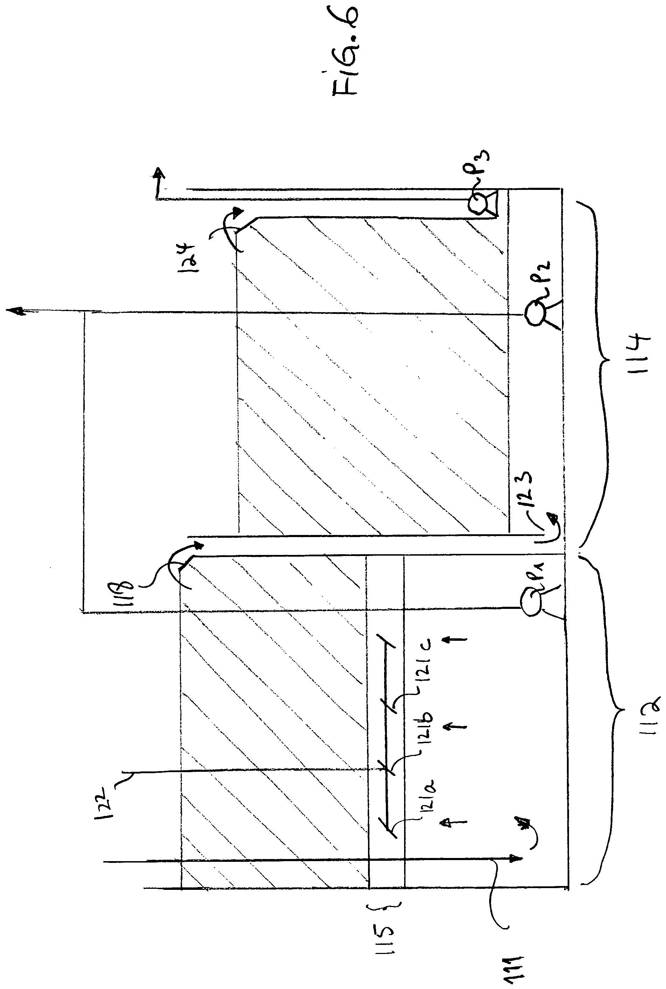

An embodiment of the second part of the process according to the invention will be described with reference to Figure 6. The degassed liquid fraction arrives via pipe (111) and enters the bottom of the vessel (112). The oil then rises towards the interface and then the oil moves towards the top where the oil phase is for example recovered at the overflow (118). The water in the bottom of the vessel (112) is pumped by a pump P1. A spray (115) is located at the water/oil interface, as shown in the embodiment in Figure 5. Pipes (121a, 121b, 121c) and (122) are shown diagrammatically. This spray is in particular fed with seawater. A make up of water may be provided so that the degassed emulsion that is treated has a water content of 15 to 35% (vol).

A make-up, for example of water, may be provided at overflow 118, up to a water content of a few percent.

The oil phase then flows from the overflow down to the bottom (123) of the settler (114) by a conduit. The oil also rises to the surface, as before. The water in the bottom of the settler (114) is pumped by a pump P2. The two flows from pumps P1 and P2 are passed to a water treatment unit (not shown). The oil is finally recovered using an overflow (124) and is then pumped by a pump P3, being passed to the oil storage facility (not shown).

Water make-ups can be obtained by any device useful for mixing fluids, such a valve or a static mixer.

## Claims

1. Process for the treatment of production crude comprising the following stages:
(a) separation of the crude into two phases, i.e. gas and degassed emulsion, and
(b) passing the degassed emulsion to the bottom of a washing vessel (112), and separation of the said degassed emulsion into water and oil and wherein stage (b) comprises the substage (b1) of washing said degassed emulsion with water at the oil/water interface, the washing vessel (112) comprising a spray or wash water distribution system (115) for washing said degassed emulsion with water at the oil/water interface, the spray or wash water distribution system (115) comprising a plurality of pipes (121a, 121b, 121c) connected together in the form of a manifold.

2. Process according to claim 1, in which stage (b) comprises substage (b2) of stripping with gas, preferably an acid gas.

3. Process according to one of claims 1 to 2, in which stage (b) comprises the substage (b3) of washing the said emulsion with water at the gas/oil interface.

4. Process according to any of claims 1 to 3, also comprising a stage (c) of settling the oil originating from stage (b).

5. Process according to any one of claims 1 to 4, which comprises using a water leg from 3 to 15 meters, preferably, from 4 to 12 meters.

6. Process according to one of claims 1 to 5, in which the degassed emulsion has a water content from 15 to 35 vol%.

7. Process according to claim 6, wherein a make up of water is provided by a device useful for mixing fluids, such as a valve or a static mixer.

8. Process according to any of claims 1 to 7, in which stage (a) comprises a substage (a1) of high or medium pressure separation and a stage (a2) of low pressure separation.

9. Process according to any of claims 1 to 8, in which stage (a) is implemented at a temperature of between 35 and 75°C, advantageously between 45 and 65°C, especially between 45 and 50°C.

10. Process according to any of claims 1 to 9, in which the said stage (a) is implemented during a residence time of less than 10 minutes, preferably of between 3 and 8 minutes.

11. Process according to any one of claims 1 to 10, in which stage (b) is implemented during a residence time of between 4 and 24 hours.

12. Process according to any of claims 1 to 11, in which the production crude is a complex crude, preferably a naphthenic crude.

13. Apparatus for implementing the process of any of claims 1 to 12, said process comprising:
(a) a unit (102; 108) for separation of the crude into two phases, gas and degassed emulsion, and
(b) a vessel (112) for separating the said degassed emulsion into water and oil, said vessel (112) comprising:
- a degassed emulsion of water and oil, the degassed emulsion defining an oil/water interface,
- a feed (111) for said degassed emulsion at the bottom of said vessel,
the apparatus comprising a spray or wash water distribution system (115) for washing the said degassed emulsion with water at the oil/water interface, the spray or wash water distribution system (115) comprising a plurality of pipes (121a, 121b, 121c) connected together in the form of a manifold.

14. Apparatus according to one claim 13, also comprising a distributor (116) for stripping gas at the bottom of the vessel (112).

15. Apparatus according to any one of claims 13 to 14, also comprising a spray or water distribution system (117) for washing the said emulsion with water at the gas/oil interface.

16. Apparatus according to any one of claims 13 to 15, also comprising a settler (114) downstream from the vessel (112).

17. Apparatus according to any one of claims 13 to 16, which comprises a water leg from 3 to 15 meters.

18. Apparatus according to any one of claims 13 to 16, which comprises a water leg from 4 to 12 meters.

19. Apparatus according to any one of claims 13 to 18, comprising a water make-up device upstream of the feed (111).

20. Apparatus according to any of claims 13 to 19, comprising a high or medium pressure separator (102) and a low pressure separator (108).

21. Ship or barge comprising the apparatus according to any of claims 13 to 20, the separation unit (102; 108) being on the topsides while the vessel (112) or settler is in the hull.

## Patentansprüche

1. Verfahren für die Behandlung von Förderungsrohöl, umfassend die folgenden Abschnitte:
(a) Trennen des Rohöls in zwei Phasen, d.h. Gas und entgaste Emulsion, und
(b) Führen der entgasten Emulsion zum Boden eines Waschgefäßes (112) und Trennen der entgasten Emulsion in Wasser und Öl
und wobei der Abschnitt (b) den Unterabschnitt (b1) des Waschens der entgasten Emulsion mit Wasser an der Öl-/Wasser-Grenzfläche umfasst, wobei das Waschgefäß (112) ein Sprüh- oder Waschwasserverteilungssystem (115) zum Waschen der entgasten Emulsion mit Wasser an der Öl-/Wasser-Grenzfläche umfasst, wobei das Sprüh- oder Waschwasserverteilungssystem (115) eine Mehrzahl von Röhren (121a, 121b, 121c) umfasst, die in Form eines Sammelrohrs miteinander verbunden sind.

2. Verfahren nach Anspruch 1, wobei der Abschnitt (b) den Unterabschnitt (b2) des Abstreifens mit Gas, bevorzugt einem sauren Gas, umfasst.

3. Verfahren nach einem der Ansprüche 1 bis 2, wobei der Abschnitt (b) den Unterabschnitt (b3) des Waschens der Emulsion mit Wasser an der Öl-/Wasser-Grenzfläche umfasst.

4. Verfahren nach einem der Ansprüche 1 bis 3, das auch einen Abschnitt (c) des Absetzens des Öls, das aus dem Abschnitt (b) stammt, umfasst.

5. Verfahren nach einem der Ansprüche 1 bis 4, das das Verwenden eines Wasserschenkels von 3 bis 15 Metern, bevorzugt von 4 bis 12 Metern, umfasst.

6. Verfahren nach einem der Ansprüche 1 bis 5, wobei die entgaste Emulsion einen Wassergehalt von 15 bis 35 Vol.-% aufweist.

7. Verfahren nach Anspruch 6, wobei eine Ergänzung von Wasser durch eine Vorrichtung bereitgestellt wird, die zum Mischen von Fluiden nützlich ist, wie beispielsweise ein Ventil oder ein Statikmischer.

8. Verfahren nach einem der Ansprüche 1 bis 7, wobei der Abschnitt (a) einen Unterabschnitt (a1) von Trennung unter hohem oder mittlerem Druck und einen Abschnitt (a2) von Trennung unter niederem Druck umfasst.

9. Verfahren nach einem der Ansprüche 1 bis 8, wobei der Abschnitt (a) bei einer Temperatur zwischen 35 und 75 °C, vorteilhafterweise zwischen 45 und 65 °C, insbesondere zwischen 45 und 50 °C ausgeführt wird.

10. Verfahren nach einem der Ansprüche 1 bis 9, wobei der Abschnitt (a) während einer Aufenthaltszeit von weniger als 10 Minuten, bevorzugt von 3 bis 8 Minuten, ausgeführt wird.

11. Verfahren nach einem der Ansprüche 1 bis 10, wobei der Abschnitt (b) während einer Aufenthaltszeit zwischen 4 und 24 Stunden ausgeführt wird.

12. Verfahren nach einem der Ansprüche 1 bis 11, wobei das Förderungsrohöl ein komplexes Rohöl, bevorzugt ein naphthenisches Rohöl, ist.

13. Vorrichtung zum Ausführen des Verfahrens nach einem der Ansprüche 1 bis 12, umfassend:
(a) eine Einheit (102, 108) zum Trennen des Rohöls in zwei Phasen, Gas und entgaste Emulsion, und
(b) ein Gefäß (112) zum Trennen der entgasten Emulsion in Wasser und Öl, wobei das Gefäß (112) Folgendes umfasst:
- eine entgaste Emulsion von Wasser und Öl, wobei die entgaste Emulsion eine Öl-/Wasser-Grenzfläche definiert,
- eine Zufuhr (111) für die entgaste Emulsion am Boden des Gefäßes,
wobei die Vorrichtung ein Sprüh- oder Waschwasserverteilungssystem (115) zum Waschen der entgasten Emulsion mit Wasser an der Öl-/Wasser Grenzfläche umfasst, wobei das Sprüh- oder Waschwasserverteilungssystem (115) eine Mehrzahl von Röhren (121a, 121b, 121c) umfasst, die in Form eines Sammelrohrs miteinander verbunden sind.

14. Vorrichtung nach einem Anspruch 13, die auch einen Verteiler (116) zum Abstreifen von Gas am Boden des Gefäßes (112) umfasst.

15. Vorrichtung nach einem der Ansprüche 13 bis 14, die auch ein Sprüh- oder Wasserverteilungssystem (117) zum Waschen der Emulsion mit Wasser an der Gas-/Ölgrenzfläche umfasst.

16. Vorrichtung nach einem der Ansprüche 13 bis 15, die auch eine Absetzvorrichtung (114) stromabwärts von dem Gefäß (112) umfasst.

17. Vorrichtung nach einem der Ansprüche 13 bis 16, die einen Wasserschenkel von 3 bis 15 Metern umfasst.

18. Vorrichtung nach einem der Ansprüche 13 bis 16, die einen Wasserschenkel von 4 bis 12 Metern umfasst.

19. Vorrichtung nach einem der Ansprüche 13 bis 18, die eine Wasserergänzungsvorrichtung stromaufwärts von der Zufuhr (111) umfasst.

20. Vorrichtung nach einem der Ansprüche 13 bis 19, die eine Trennungsvorrichtung (102) von hohem oder mittlerem Druck und eine Trennungsvorrichtung (108) von niederen Druck umfasst.

21. Schiff oder Frachtkahn, das/der die Vorrichtung nach einem der Ansprüche 13 bis 20 umfasst, wobei die Trennungseinheit (102, 108) sich auf der Oberseite befindet, während das Gefäß (112) oder die Absetzvorrichtung sich im Rumpf befindet.

## Revendications

1. Procédé pour le traitement de brut de production comprenant les étapes suivantes :
(a) séparation du brut en deux phases, à savoir un gaz et une émulsion dégazée, et
(b) passage de l'émulsion dégazée au fond d'une cuve de lavage (112), et séparation de ladite émulsion dégazée en eau et huile,
et dans lequel l'étape (b) comprend la sous-étape (b1) de lavage de ladite émulsion dégazée avec de l'eau au niveau de l'interface huile/eau, la cuve de lavage (112) comprenant un système de distribution d'eau de lavage ou de pulvérisation (115) pour laver ladite émulsion dégazée avec de l'eau au niveau de l'interface huile/eau, le système de distribution d'eau de lavage ou de pulvérisation (115) comprenant une pluralité de tuyaux (121a, 121b, 121c) connectés ensemble sous la forme d'un collecteur.

2. Procédé selon la revendication 1, dans lequel l'étape (b) comprend la sous-étape (b2) d'extraction avec un gaz, de préférence un gaz acide.

3. Procédé selon l'une des revendications 1 à 2, dans lequel l'étape (b) comprend la sous-étape (b3) de lavage de ladite émulsion avec de l'eau au niveau de l'interface gaz/huile.

4. Procédé selon l'une quelconque des revendications 1 à 3, comprenant aussi une étape (c) de décantation de l'huile provenant de l'étape (b).

5. Procédé selon l'une quelconque des revendications 1 à 4, qui comprend l'utilisation d'une colonne d'eau de 3 à 15 mètres, de préférence de 4 à 12 mètres.

6. Procédé selon l'une quelconque des revendications 1 à 5, dans lequel l'émulsion dégazée a une teneur en eau de 15 à 35 % en volume.

7. Procédé selon la revendication 6, dans lequel un appoint d'eau est apporté par un dispositif utile pour mélanger des fluides, tel qu'une vanne ou un mélangeur statique.

8. Procédé selon l'une quelconque des revendications 1 à 7, dans lequel l'étape (a) comprend une sous-étape (a1) de séparation sous une pression élevée ou moyenne et une étape (a2) de séparation sous une pression basse.

9. Procédé selon l'une quelconque des revendications 1 à 8, dans lequel l'étape (a) est mise en œuvre à une température comprise entre 35 et 75 °C, avantageusement entre 45 et 65 °C, en particulier entre 45 et 50 °C.

10. Procédé selon l'une quelconque des revendications 1 à 9, dans lequel ladite étape (a) est mise en œuvre pendant un temps de séjour inférieur à 10 minutes, de préférence compris entre 3 et 8 minutes.

11. Procédé selon l'une quelconque des revendications 1 à 10, dans lequel l'étape (b) est mise en œuvre pendant un temps de séjour compris entre 4 et 24 heures.

12. Procédé selon l'une quelconque des revendications 1 à 11, dans lequel le brut de production est un brut complexe, de préférence un brut naphténique.

13. Appareil pour mettre en œuvre le procédé de l'une quelconque des revendications 1 à 12, comprenant :
(a) une unité (102 ; 108) pour la séparation du brut en deux phases, un gaz et une émulsion dégazée, et
(b) une cuve (112) pour séparer ladite émulsion dégazée en eau et huile, ladite cuve (112) comprenant :
- une émulsion dégazée d'eau et d'huile, l'émulsion dégazée définissant une interface huile/eau,
- une alimentation (111) pour ladite émulsion dégazée au fond de ladite cuve,
l'appareil comprenant un système de distribution d'eau de lavage ou de pulvérisation (115) pour laver ladite émulsion dégazée avec de l'eau au niveau de l'interface huile/eau, le système de distribution d'eau de lavage ou de pulvérisation (115) comprenant une pluralité de tuyaux (121a, 121b, 121c) connectés ensemble sous la forme d'un collecteur.

14. Appareil selon la revendication 13, comprenant aussi un distributeur (116) pour extraire un gaz au fond de la cuve (112).

15. Appareil selon l'une quelconque des revendications 13 à 14, comprenant aussi un système de distribution d'eau de lavage ou de pulvérisation (117) pour laver ladite émulsion avec de l'eau au niveau de l'interface gaz/huile.

16. Appareil selon l'une quelconque des revendications 13 à 15, comprenant aussi un décanteur (114) en aval de la cuve (112).

17. Appareil selon l'une quelconque des revendications 13 à 16, qui comprend une colonne d'eau de 3 à 15 mètres.

18. Appareil selon l'une quelconque des revendications 13 à 16, qui comprend une colonne d'eau de 4 à 12 mètres.

19. Appareil selon l'une quelconque des revendications 13 à 18, comprenant un dispositif d'appoint d'eau en amont de l'alimentation (111).

20. Appareil selon l'une quelconque des revendications 13 à 19, comprenant un séparateur sous pression élevée ou moyenne (102) et un séparateur sous pression basse (108).

21. Navire ou barge comprenant l'appareil selon l'une quelconque des revendications 13 à 20, l'unité de séparation (102 ; 108) étant sur les superstructures tandis que la cuve (112) ou le décanteur est dans la coque.
